# EUROPEAN PATENT SPECIFICATION

(11) **EP 3 424 379 B1**
(45) Date of publication and mention of the grant of the patent: **11.11.2020**
(21) Application number: 17759315.9
(22) Date of filing: 28.02.2017
(51) Int. Cl.: A47J 42/40, A47J 42/50, G01F 23/20

(54) **AUTOMATIC COFFEE GRINDER**
AUTOMATISCHE KAFFEEMÜHLE
MOULIN À CAFÉ AUTOMATIQUE

(30) Priority: 03.03.2016 ES 201630249
(43) Date of publication of application: 09.01.2019
(73) Proprietor: Markibar Innovacion, S.L., 31191 Esquiroz (ES)
(72) Inventor: MARKOTEGI GOÑI, Jose Angel, 31191 Esquiroz (ES)
(86) International application number: PCT/ES2017/070113
(87) International publication number: WO 2017/149183

(56) References cited:
- EP-A1- 0 042 245
- EP-A1- 0 531 563
- EP-A1- 2 047 780
- WO-A1-99/63310
- WO-A1-2012/138327
- ES-U- 1 068 358
- RO-B1- 112 215
- UA-U- 272 85U
- US-A- 5 690 283
- US-A1- 2009 255 409

## Description

### PURPOSE OF THE INVENTION

This invention refers to an automatic coffee grinder that incorporates a system capable of dispensing a programmed weight of ground coffee.

The purpose of the invention is to have a coffee grinder whose doses can be programmed using mass as the programmable element. The grinder supplies a flow of ground coffee to a doser. The ground coffee is weighed in real time, so the grinding stops once the desired dose in grams is reached. At that time, the operator can place the filter holder into the grinder and this opens a hatch to instantly deliver the coffee stored in the doser.

Another purpose of the invention is to be able to supply different masses of coffee in order to serve one, two or more coffees instantly.

The technical sector for which this grinder is designed corresponds to that of machinery for professional catering: hotels, cafeterias and restaurants, intended for the preparation of espresso coffee with traditional coffee machines that have filter holders loaded manually with coffee ground in an independent grinder.

### BACKGROUND OF THE INVENTION

In the catering sector, so-called espresso coffee is mainly currently produced with manual coffee machines that have a coffee holder or filter holder, commonly known as a "porta", into which the ground coffee is loaded. This is manually handled by the waiter. The waiter or person in charge of serving the coffee places the filter holder into the grinder and after receiving the corresponding dose of ground coffee fixes it in the coffee machine to produce the coffee, which is done by passing water through the contents of the filter holder.

Two types of grinder are commonly found on the market. The most common are traditional grinders which have a hopper of coffee beans and a container for ground coffee. The waiter has a lever on the base of this container which when used allows a volumetrically controlled dose of coffee to fall into the filter holder. In order to obtain the dose for 2 coffees, the lever is pressed twice for the same filter holder. This type of grinder has the problem that the dose of coffee may have been ground several hours earlier, with the consequent loss of aromas, oxidation of the coffee, etc. In addition, the doses are difficult to programme as the volume supplied with each push of the lever must be amended and for this the height of this volume must be amended mechanically. Another problem inherent to this system is that the dose for two coffees is obtained by pushing the lever twice and therefore the dose needs to be double that for one coffee, which limits the programming options.

Another type of grinder involves what is called "Grinding on demand". These control the dose of coffee through timing. With these grinders there is no ground coffee container and the grinder grinds for a specific period of time when the filter holder is placed in the mouth of the grinder's outlet, grinding the dose directly into the filter holder. These grinders have the advantage of always supplying recently ground coffee, thus maintaining all of its aromas. Their main drawback is that the variation in certain parameters of the grinder and the coffee beans themselves directly affect the flow rate of ground coffee, thereby seriously affecting the accuracy of the doses obtained. Thus, a change in the grinding fineness significantly affects the flow obtained in g/s, so in order to obtain the same dose the grinding time must be reprogrammed. Parameters such as the dampness of the coffee beans, the wear on the blades that cut them, a change in the type of coffee beans, etc. require a readjustment of the grinding time in order to retain the same dose, which leads to constant interventions by qualified operators. Another disadvantage of these grinders is their low production capacity, as the operator has to wait for the coffee to be ground into the filter holder.

US patent 5522556 can be mentioned as an antecedent to this patent. In this, a grinder is claimed to supply ground coffee to a filter coffee machine. This invention has several disadvantages compared to the idea proposed in this report. In our invention the dose has already been weighed inside the grinder itself, so delivery into the filter holder is immediate; whereas in the aforementioned patent the filter holder must be placed empty into the machine, waiting until the desired dose has been ground. This makes the operation very slow. The filter holder is also an element in contact with the coffee machine, making it susceptible to carrying water, remnants of coffee, etc. which may change the tare of the filter holder, affecting accuracy. Moreover, the force transducers that measure the weight are delicate elements, When hit with the filter holder they may become damaged or require a subsequent tare operation.

Another patent from the same applicant, US 5462236, claims a coffee grinding apparatus that measures an amount of coffee for grinding as a function of time and is calibrated to discharge a selected weight of ground coffee, i.e. a timer grinder that is calibrated to know the grinding flow rate at a given time. This system has the disadvantage that, as has been explained above, due to being a timed dose variations in different parameters between calibrations affect the dose obtained.

Another related patent is US 4789106, which describes a coffee bean weight/grind. This equipment has two hoppers, one at the top with coffee beans from which, through hatches, a second hopper is fed via gravity. This second hopper is weighed using a swing arm. Once the desired dose has been reached, the flow of coffee is stopped. In this way, the coffee beans are weighed before grinding. With the filter holder placed at the bottom of the grinder, the beans that have been weighed start to be ground. This idea has several drawbacks. Firstly, its slowness and operational difficulties, similar to the first aforementioned patent. Another drawback is the equipment's great height. The operation of weighing beans instead of ground coffee also presents problems for the accuracy of the weighed dose, especially if we wish to weigh small doses.

Another related patent is US 2009255409 A1, an extension to the United States of America of international application PCT/ES07/00421, with priority in turn in Spanish patent P200601856 (ES2274738), which describes an improvement to Spanish patent P200002205 (ES2212683), including stacked chambers separated by hatches so that doses from one or more chambers can be immediately dispensed. These chambers are filled with ground coffee, dispensing the dose from each chamber through a timed control of the grinding motor or through measuring the volume with optical sensors, without in any case suggesting a measurement by weight.

Finally, we must mention utility model ES1068358U, whose holder is the applicant himself, which describes an automatic coffee grinder with stacked doses. This allows for the identification of a filter holder for one or two coffees by incorporating an identifier in one of these filter holders, detectable by a sensor built into the grinder, in such a way that the grinder supplies the dose from one or more chambers depending on the presence of this identifier, without this document mentioning in any case the dispensing by weight system.

### DESCRIPTION OF THE INVENTION

To achieve the objective proposed in this patent, a grinder is designed with the following characteristics.

The grinder has a coffee bean hopper that is filled with coffee beans and feeds coffee to a grinder chamber operated by a motor. The ground coffee exits this chamber towards a ground coffee outlet, through which it falls onto a floating doser assembly. This floating doser assembly has one or more stacked chambers, separated by different doors, which allow different doses to be held in each in order to supply the doses for one or more coffees with their respective previously programmed masses. As has already been explained above, these doors as well as their activation mechanisms form part of the floating doser assembly, avoiding contact with the fixed parts of the equipment that would affect the element's overall buoyancy. The floating doser assembly sits on a force transducer to which it transmits its weight at all times so that the chambers can be filled from bottom to top with the desired doses, opening or closing the different doors.

When the operator wishes to make a coffee, they take the filter holder for the machine and place it in the grinder under the doser. The grinder delivers the corresponding dose by opening one or more hatches, depending on whether they want to make one or two coffees.

First, the transducer can calibrate the weight of the doser assembly when it is empty, measuring the weight of the doser after a double service. This allows us to check whether there are tare changes over time (accumulation of dust, wearing of parts, etc.). Second, the dose in each of the stacked chambers can be weighed independently, based on weighing the tare of the doser plus the different stacked doses. In this way, the dose of each chamber is the difference between the total weight and the current tare of the doser.

The grinder logically has an electronic control card with its corresponding interfaces so that the operator can programme the doses they wish to store in each of the doser's chambers.

### DESCRIPTION OF THE DRAWINGS

In order to complement the following description and help achieve a better understanding of the invention's features, a set of drawings are provided as an integral part of a practical example for which at least the following has been represented:

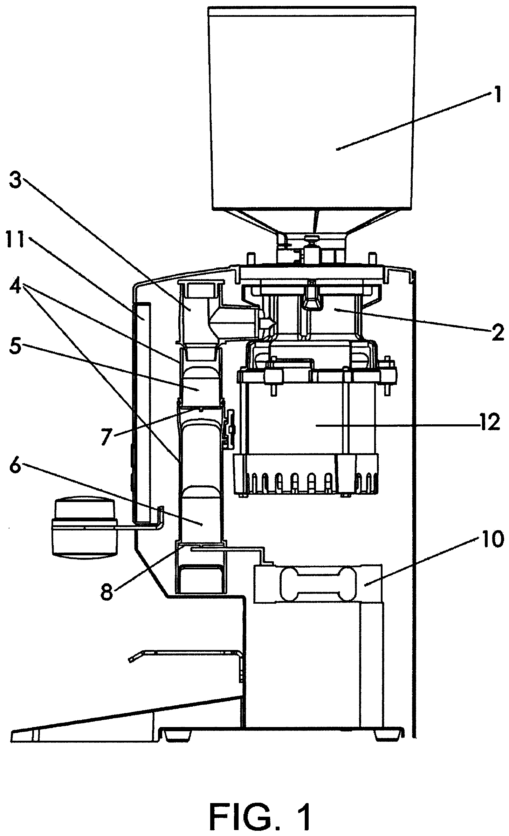

Figure 1 shows a profile view of an automatic coffee grinder, produced in accordance with the purpose of this invention.

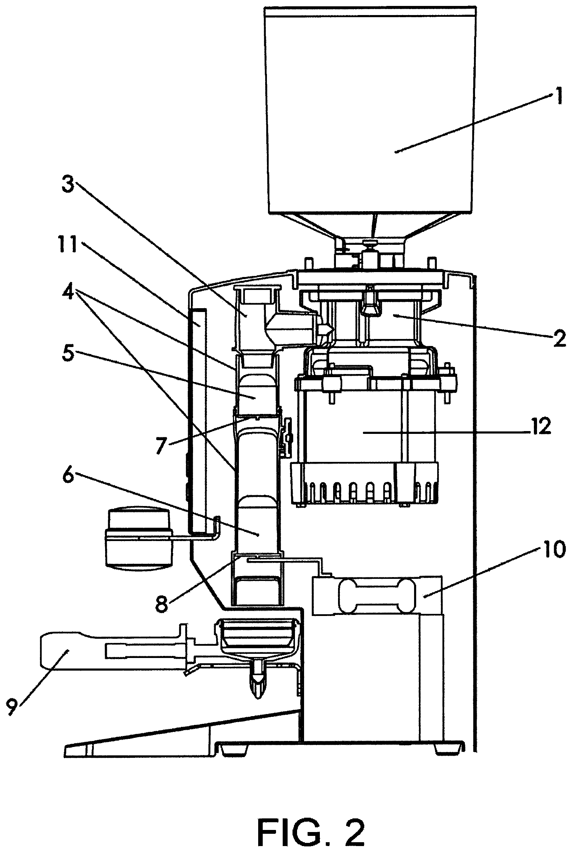

Figure 2 shows a view similar to that of the previous figure, but has the filter holder in place, into which the ground coffee is poured.

### PREFERENTIAL EMBODIMENT OF THE INVENTION

In view of the above figures, it can be observed that the grinder has a coffee bean hopper (1) which feeds coffee into a grinding chamber (2) actioned by a motor (12). The ground coffee exits this chamber towards a ground coffee outlet (3), through which it falls into a floating doser assembly (4). This floating doser assembly has two stacked chambers (5) and (6), separated by their respective doors (7 and 8), which allow different doses to be held in each of them in order to supply the doses for one or more coffees with their respective previously programmed masses. This floating doser assembly sits on a force transducer, preferably a load cell (10), to which it transmits its weight at all times so that the chambers can be filled from bottom to top with the desired doses, opening or closing the different doors (7 and 8).

The load cell (10) is a transducer that is used to convert a force (in this case the weight of the doser assembly) into an electrical signal. This conversion is indirect and takes place in two stages. The force to be measured deforms a strain gauge through a mechanical device. The strain gauge converts the displacement or deformation into electrical signals. A load cell is generally composed of four strain gauges connected in a Wheatstone bridge type configuration. The electrical output signal is typically of the order of a few millivolts and must be amplified using an instrumentation amplifier before it can be used. The output of the transducer, after being amplified, is processed using an analogue/digital converter. A suitable algorithm is applied to this conversion and the force applied to the transducer can thus be calculated. There are a multitude of designs of this type of cell on the market with different characteristics, and the one that is best suited to the values and precision required for developing this patent will be determined from among them.

Other types of force or pressure transducers can also be used to implement this patent.

When the operator wishes to make a coffee, they take the filter holder (9) for the machine and place it in the grinder under the doser. The grinder delivers the corresponding dose by opening one or more hatches, depending on whether the coffee is for one or two coffees.

At this point, the transducer measures that the corresponding dose has been delivered and can again calibrate the mass of the empty doser assembly.

In addition to providing the doses weighed in grams with high accuracy and reliability, the data provided by the force transducer also allows us to know the kilograms ground by the equipment during a certain period, detect faults such as problems with hatches opening, lack of coffee beans in the hopper, etc.

The grinder logically has an electronic control card with its corresponding interfaces (11) so that the operator can programme the doses they wish to store in each of the doser's chambers.

## Claims

1. Automatic coffee grinder, of the type that grinds and supplies a dose of coffee to a filter holder in order to prepare coffee, which includes a grinding chamber, a ground coffee doser assembly and a coffee hopper (1) that supplies coffee beans to the grinding chamber (2) connected to the ground coffee doser assembly (4), **characterised by** the doser (4) being a floating assembly that sits on a force transducer (10), equipped with means to measure the weight of both the doser (4) when it is empty and the doses of ground coffee stored inside it, as well as means to immediately dispense the previously weighed dose of coffee into the filter holder (9).

2. Automatic coffee grinder, according to the 1st claim, **characterised by** the doser (4) incorporating one or more stacked chambers (5) and (6) for storing weighed doses for one or more coffees.

3. Automatic coffee grinder, according to the 1st and 2nd claims, **characterised by** doors (7 and 8) allowing different doses to be held in each of the stacked chambers (5) and (6) forming part of the floating doser assembly (4).

4. Automatic coffee grinder, according to the 1st claim, **characterised by** incorporating an electronic control card (11) with its corresponding interfaces to programme the masses to be stored in the chambers (5 and 6).

5. Automatic coffee grinder, according to the 4th claim, **characterised by** the electronic control card (11) incorporating the means for dispensing masses of coffee of independent values to the chambers (5 and 6).

## Patentansprüche

1. Automatische Kaffeemühle, die eine Portion Kaffee mahlt und zum Zubereiten des Kaffees in einen Filterhalter gibt und die über eine Mahlkammer, eine Dosiervorrichtung für den gemahlenen Kaffee sowie einen Einfülltrichter (1) zum Einfüllen von Kaffeebohnen in die Mahlkammer (2) verfügt, welche mit der Dosiervorrichtung für gemahlenen Kaffee (4) verbunden ist, die **dadurch gekennzeichnet ist, dass** der Dosierer (4) in schwebend ausgeführt ist und auf einem Kraftaufnehmer (10) sitzt, der mit Vorrichtungen zum Messen des Gewichts sowohl des Dosierers (4) in leerem Zustand als auch der in demselben befindlichen Portionen gemahlenen Kaffees sowie mit Vorrichtungen zum sofortigen Ausgeben der zuvor gewogenen Portion Kaffee in den Filterhalter (9) ausgestattet ist.

2. Automatische Kaffeemühle gemäß Anspruch 1, **dadurch gekennzeichnet, dass** in den Dosierer (4) eine oder mehrere übereinander angeordnete Kammern (5) und (6) zum Aufbewahren gewogener Portionen für eine oder mehrere Tassen Kaffee integriert sind.

3. Automatische Kaffeemühle gemäß den Ansprüchen 1 und 2, **gekennzeichnet durch** Türen (7 und 8), die es ermöglichen, die unterschiedlichen Portionen Kaffee in den übereinander angeordneten Kammern (5) und (6) zu halten, die Teil der schwebend ausgeführten Dosiervorrichtung (4) sind.

4. Automatische Kaffeemühle gemäß Anspruch 1, **gekennzeichnet durch** die Integration einer elektronischen Steuerplatine (11) mit ihren entsprechenden Schnittstellen zum Programmieren der in den Kammern (5 und 6) aufzubewahrenden Mengen.

5. Automatische Kaffeemühle gemäß Anspruch 4, **gekennzeichnet durch** eine elektronische Steuerplatine (11), die mit Mitteln ausgestattet ist, die es ermöglichen, unabhängig voneinander unterschiedliche Kaffeemengen in die Kammern (5 und 6) abzugeben.

## Revendications

1. Moulin à café automatique, du type qui moud et fournit une dose de café à un porte-filtre afin de préparer le café, qui comprend une chambre de broyage, un ensemble doseur de café moulu et une trémie à café (1) qui alimente en grains de café la chambre de broyage (2) reliée à l'ensemble doseur de café moulu (4), **caractérisé en ce que** le doseur (4) est un ensemble flottant qui repose sur un capteur de force (10), équipé de moyens pour mesurer le poids à la fois du doseur (4) lorsqu'il est vide et des doses de café moulu stockées à l'intérieur de celui-ci, ainsi que de moyens pour distribuer immédiatement la dose de café préalablement pesée dans le porte-filtre (9).

2. Moulin à café automatique, selon la 1^{ère} revendication, **caractérisé par** le doseur (4) comprenant une ou plusieurs chambres empilées (5) et (6) pour le stockage de doses pesées pour un ou plusieurs cafés.

3. Moulin à café automatique, selon les 1^{ère} et 2^{ème} revendications, **caractérisé par** des portes (7 et 8) permettant de contenir des doses différentes dans chacune des chambres empilées (5) et (6) faisant partie de l'ensemble de dosage flottant (4).

4. Moulin à café automatique, selon la 1^{ère} revendication, **caractérisé par** l'incorporation d'une carte de contrôle électronique (11) avec ses interfaces correspondantes pour programmer les volumes à stocker dans les chambres (5 et 6).

5. Moulin à café automatique, selon la 4^{ème} revendication, **caractérisé par** la carte de contrôle électronique (11) incorporant le moyen de distribuer des volumes de café de valeur indépendante aux chambres (5 et 6).
